# EUROPÄISCHE PATENTSCHRIFT

(11) **EP 2 226 164 B1**
(45) Veröffentlichungstag und Bekanntmachung des Hinweises auf die Patenterteilung: **26.11.2014**
(21) Anmeldenummer: 10164518.2
(22) Anmeldetag: 28.03.2003
(51) Int. Cl.: B25J 19/00, H02G 11/00, F16G 13/16

(54) **Roboter mit einer Leitungsführungseinrichtung**
Robot with a line guidance device
Robot muni d'un dispositif de guidage de conduite

(30) Priorität: 11.04.2002 DE 10216081
(43) Veröffentlichungstag der Anmeldung: 08.09.2010
(62) Teilanmeldung aus: 03745774.4
(73) Patentinhaber: Tsubaki Kabelschlepp GmbH, 57482 Wenden-Gerlingen (DE)
(72) Erfinder: Wehler, Herbert, 57290 Neunkirchen (DE); Kemper, Uwe, 57223 Kreuztal (DE)
(74) Vertreter: Heine, Christian Klaus

(56) Entgegenhaltungen:
- EP-A1- 0 277 389
- EP-A2- 1 145 808

## Beschreibung

Der Gegenstand der Erfindung bezieht sich auf einen Roboter mit wenigstens einer, mindestens teilweise außenseitig verlaufende Leitungsführungseinrichtung, in der Leitungen, Schläuche oder dergleichen geführt werden.

Unter der Bezeichnung "Roboter" werden insbesondere Industrieroboter verstanden, wie er beispielsweise innerhalb der automatisierten Automobilherstellung Verwendung findet. Grundsätzlich wird hierunter im weiteren Sinne auch eine jede Handhabungseinrichtung verstanden, die insbesondere für den industriellen Einsatz konzipiert ist.

Leitungen, Schläuche oder dergleichen, nachfolgend als Versorgungsleitungen bezeichnet, dienen bei einem Roboter zur Versorgung des an der sogenannten Roboterhand angeordneten Werkzeugs.

Zur Führung der Versorgungsleitungen finden sogenannte HüllscMäuche Verwendung. Die Versorgungsleitungen werden in dem Hüllschlauch verlegt. Der Hüllschlauch wird als Leitungsführungseinrichtung mindestens teilweise außenseitig am Roboter geführt. Es ist bekannt, dass der Hüllschlauch am Roboter selbst festgelegt wird, wobei die Festlegung des Hüllschlauches derart erfolgt, dass der Hüllschlauch der Bewegung des Roboters, insbesondere der Roboterhand folgen kann. Eine solche Ausbildung eines Roboters mit einer wenigstens teilweise außenseitig verlaufenden Leitungsführungseinrichtung, in der Leitungen, Schläuche oder dergleichen geführt werden, ist durch die Druckschrift DE20113950U1 bekannt.

Durch die Druckschrift DE 20010696 U1 ist eine Vorrichtung zum Festlegen von Kabein eines Hüllschlauches bekannt. Innerhalb des Hüllschlauches werden die Versorgungsleitungen eines Roboters Die Vorrichtung zeichnet sich dadurch aus, der Hüllschlauch axial fest und eine die kabelkraftschlüssig haltende Kabelnuss axial- und drehfest in einer Klemmschelle gehalten sind.

Im Zusammenhang mit der Führung von Versorgungsleitungen ist durch die Gebrauchsmusterschrift DE20008054U1 des weiteren eine Schlauchführung im Sockel eines Roboters bekannt. Die Schlauchführung weist einen Schlauch mit einem unteren und einem oberen Schlaucharm, die durch einen gebogenen Schlauchkopf miteinander verbunden sind, auf. Der obere Schlauch ist relativ zum unteren Schlaucharm in horizontaler Richtung hin versetzt geführt. Durch den horizontalen Versatz des oberen Schlaucharms relativ zum unteren Schlaucharm soll erreicht werden, dass der diese beiden verbindenden Schlauchkopf zur Vertikalen geneigt ist und hierdurch eine geringe Bauchhöhe gegeben wird. Des weiteren wird erreicht, dass der Schlauchkopf nicht mehr an der Sockelwandung entlang schleift und der hierdurch bedingte Verschleiß dadurch ausgestaltet wird.

Bedingt durch die Bewegung des Roboters findet eine entsprechende Bewegung des Hüllschlauchs statt. Da die dem Hüllschlauch geführten Leitungen, Schläuche oder desgleichen außerhalb der neutralen Fase angeordnet sind, findet zwischen den Leitungen eine Relativbewegung statt. Während dieser Relativbewegung reiben die Leitungen, Schläuche und desgleichen aneinander, was mit einem Verschleiß verbunden ist. Verschleißbedingt kann es zu einer Zerstörung der Versorgungsleitungen kommen. Dies führt zu einem Ausfall des Roboters. Um dies zu vermeiden ist bekannt, dass die Versorgungsleitungen innerhalb des Hüllschlauches in einem Schmiermittel verlegt werden, wie dies im Artikel "Schlauchpaketlösungen" in KEM, Sonderheft 2, August 2001 beschrieben ist.

Problematisch bei einer solchen Lösung ist, dass die Gesamtmasse des HüHschlauches mit den Versorgungsleitungen erheblich steigt. Des weiteren ist eine Vorortreparatur nicht oder nur mit einem erheblichen Aufwand möglich. Um jedoch den Produktionsprozess nicht lange brechen zu müssen, werden daher entsprechende Hüllschläuche mit den für den betreffenden Roboter vorgesehenen Versorgungsleitungen als Ersatzteil bereitgestellt. Dies führt zu einem nicht unerheblichen Investitionsvolumen.

Die Füllung des Schmiermittels sowie die Leitungen machen es erforderlich, dass der Hüllschlauch eine Mindesttragfähigkeit aufweist. Zur Erhöhung der Mindesttragfähigkeit des Hüllschlauches ist es erforderlich, diesen entsprechend steif auszubilden, was der gegenläufigen Anforderung an die Beweglichkeit des Hüllschlauches während des Betriebes des Roboters entspricht.

Durch die Druckschrift DE20112491U1 ist ein Roboter mit einer Leitungsführungseinrichtung bekannt. Dieser Roboter weist im Bereich des Sockels einen Korb auf, in dem eine oder mehrere Schlaufen der Leitungführungseinrichtung abgelegt sind. Durch das Gebrauchsmuster DE20008054U1 ist bekannt, dass der Roboter im Sockelbereich eine Beitungsführungseinrichtung aufweist, die einen unteren und einen oberen Schlaucharm aufweist, die durch einen gebogenen Schlauchkopf miteinander verbunden sind. Der obere Schlauch ist relativ zum unteren Schlaucharm in horizontaler Richtung hinversetzt geführt.

Durch die EP 1 145 808 A2 ist ein Roboter mit einem Robotersockel und einem relativ zu diesem um eine vertikale Achse drehbaren Karussell sowie mit einem vom Sockel zumindest zum Karussell im Sockel in eine U-Schlaufe geführten Versorgungsstrang bekannt. Der Versorgungsstrang wird in einer ersten Ebene über dem Rand des Karussells ausgebildeten Führungsbereich geführt. Es ist ein Speicherbereich vorgesehen, der in einer zweiten, von der ersten Ebene verschiedenen Ebene, ausgebildet ist. Diese Ebenen sind parallel.

Hiervon ausgehend liegt der vorliegenden Erfindung die Aufgabe zugrunde, einen Roboter mit einer verbesserten Einrichtung für die Leitungsfüh-rungseinrichtung bereitzustellen.

Es wird ein erfindungsgemäßer Roboter mit wenigstens einer mindestens teilweise außenseitig verlaufenden Leitungsführungsemrichtung, In der Leitungen, Schläuche oder dergleichen geführt werden, mit einer Einrichtung zum Führen und Speichern der Leitungsführungsemrichtung im Sockel des Roboters vorgeschlagen, wobei die Einrichtung einen in einer ersten Ebene ausgebildeten Führungsbereich und einen in einer zweiten, von der ersten Ebene verschiedenen Ebene ausgebildeten Speicherbereich aufweist.

Die Ebenen, in denen der Führungsbereich bzw. der Speicherbereich liegt, unter einem Winkel von bis zu 90° zueinander. Bevorzugt ist hierbei eine Ausbildung bei der der Speicherbereich in einer im wesentlichen vertikalen Ebene liegt.

Insbesondere wird vorgeschlagen, dass der Roboter einen Führungsbereich aufweist, der in einer im wesentlichen horizontalen Ebene liegt. Durch diesen Führungskanal wird eine vereinfachte und sichere Führung der Leitungsführungseinrichtung erzielt.

Der Führungsbereich ist vorzugsweise in Form einer Rinne ausgebildet, durch die eine sichere und zuverlässige Führung der Leitungsführungseinrichtung erreicht wird. Dies ist insbesondere dann vorteilhaft, wenn der Roboter um eine im wesentlichen zur Ebene des Führungsbereichs stehende Achse verdreht wird.

Die Form des Führungsbereichs ist insbesondere so ausgebildet, dass diese der Bewegung des Roboters entspricht. Insbesondere ist der Führungsbereich bogenförmig, insbesondere teilkreisförmig, vorzugsweise ringförmig ausgebildet.

Um den Speicherbereich möglichst kompakt auszubilden, um so den notwendigen Platzbedarf zu verringern wird vorgeschlagen, dass die Leitungsführungseinrichtung im Speicherbereich einen Obertrum und einen Untertrum bildet, wobei der und der Untertrum durch einen gekrümmten Bereich miteinander verbunden sind.

Das Ende des Untertrums ist ortsfest angeordnet. Um den Austausch der Leitungsführungseinrichtung zu vereinfachen wird vorgeschlagen, dass der Führungsbereich und der Speicherbereich lösbar miteinander verbunden sind. Dies eröffnet die Möglichkeit, den Speicherbereich zu entfernen, um so an den ortsfesten Anschluss der Leitungsführungsemrichtung zu gelangen. Ein weiterer Vorteil der lösbaren Verbindung zwischen dem Führungsbereich und dem Speicherbereich kann darin gesehen werden, das Speicherbereiche mit unterschiedlichen Speichervolumen bereitgewerden, an die die Erfordernisse des Roboters angepasst sind.

Um den Bewegungsablauf des Roboters durch die Leitungsführungseinrichtung so wenig wie möglich zu beeinflussen und um die auf die Leitungsführungseinrichtung einwirkenden Kräfte zu verringern, wird vorgeschlagen, dass zwischen dem Führungsbereich und dem Speicherbereich ein Übergangsbereich vorgesehen ist, der reibungslosen Ablauf der Bewegungen ermöglicht.

Nach einer noch weiteren vorteilhaften Ausbildung des Roboters wird vorgeschlagen, dass der Führungsbereich, der Speicherbereich und/oder der Übergangsbereich wenigstens teilweise als Formteile, insbesondere ausgebildet sind.

Die Glieder der Leitungsführungseinrichtung sind vorzugsweise einteilig ausgebildet. Insbesondere wird vorgeschlagen, dass die Glieder Spritzteile sind. In Abhängigkeit von dem Einsatz können die Glieder aus Kunststoff, rungseinrichtung durch Glieder eine Metallkammer, insbesondere einem Leichtmetall ausgebildet sein.

Weitere Einzelheiten und Vorteile der Erfindung werden anhand der in der Zeichnung dargestellten Ausführungsbeispiele erläutert. Der Gegenstand der Erfindung ist jedoch nicht auf diese Ausführungsbeispiele beschränkt.

Es zeigen:
- Fig_{.}: 1 schematisch einen Roboter mit einer Rettungsführungseinheit,
- Fig. 2: in einer perspektivischen Ansicht einen Abschnitt einer Leitungs- führungseinrichtung,
- Fig. 3: perspektivisch ein Glied der Leitungsführungseinhelt nach Figur 2 in einer Vorderansicht,
- Fig. 4: das Glied, der Leitungsführungsanordnung nach Figur 2 in einer Rückansicht,
- Fig. 5: ein weiteres Ausführungsbeispiel einer Leitungsführungseinrich- tung in einer perspektivischen Ansicht von vorne,
- Fig. 6: das Glied nach Figur 5 in einer perspektivischen Ansicht von hin- ten,
- Fig. 7: ein drittes Ausführungsbeispiel eines Gliedes einer Leitungsfüh- rungseinrichtung in einer perspektivischen Ansicht von vorne,
- Fig, 8: das Glied nach Figur 7 in einer perspektivischen Ansicht von hin- ten,

- Fig. 9: perspektivisch eine Halterung im geöffneten Zustand zur Festle- gung der Leitungsführungsanordnung an einem Roboter,
- Fig. 10: perspektivisch die geschlossene Halterung,
- Fig. 11: schematisch eine Einrichtung zum Führen und. Speichern einer Leitungsführungseinrichtung im Sockelbereich eines Roboters in einer Vorderansicht,
- Fig. 12: die Einrichtung zum Führen und Speichern der Leitungsführungs- einrichtung nach Figur 11 in einer perspektivischen Ansicht,
- Fig. 13: perspektivisch einen Teil der Einrichtung nach Figur 11,
- Fig. 14: ein zweites Ausführungsbeispiel einer Einrichtung zum Führen und Speichern einer Leitungsführungseinrichtung im Sockelbe- reich eines Roboters in einer Vorderansicht,
- Fig. 15: perspektivisch die Einrichtung nach Figur 14,
- Fig. 16: eine Seitenansicht von rechts der Einrichtung nach Figur 14,
- Fig. 17: eine Draufsicht der Einrichtung nach Figur 14,
- Fig. 18: perspektivisch in einer Ansicht von schräg oben einen Roboter mit einer Einrichtung nach Figur 14 in einer ersten Stellung und
- Fig. 19: perspektivisch von schräg oben einen Roboter mit einer Einrich- tung nach Figur 14 in einer zweiten Stellung.

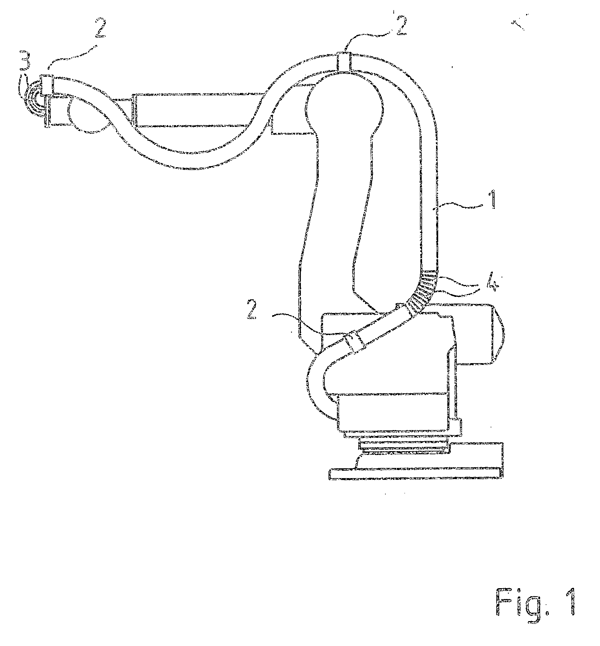

Figur 1 zeigt schematisch einen bekannten Roboter in einer Seitenansicht mit einer Leitungsführungseinrichtung, die außenseitig verläuft. In der Leitungsführungseinrichtung werden Leitungen, Schläuche oder dergl. geführt, die zur Versorgung des Roboters bzw. des Roboterwerkzeuges dienen. Mit den Bezugszeichen 3 sind die in der Leitungsführungseinrichtung 1 geführten Leitungen bezeichnet.

Die Leitungsführungseinrichtung ist durch. Halterungen 2 an dem Roboter festgelegt. Die Anordnung der Halterungen und/oder die Anzahl der Halterungen kann unterschiedlich sein. Es muss jedoch stets sichergestellt sein, dass es durch die Bewegung des Roboters zu keiner Zerstörung der Leitungsführungseinrichtung kommt.

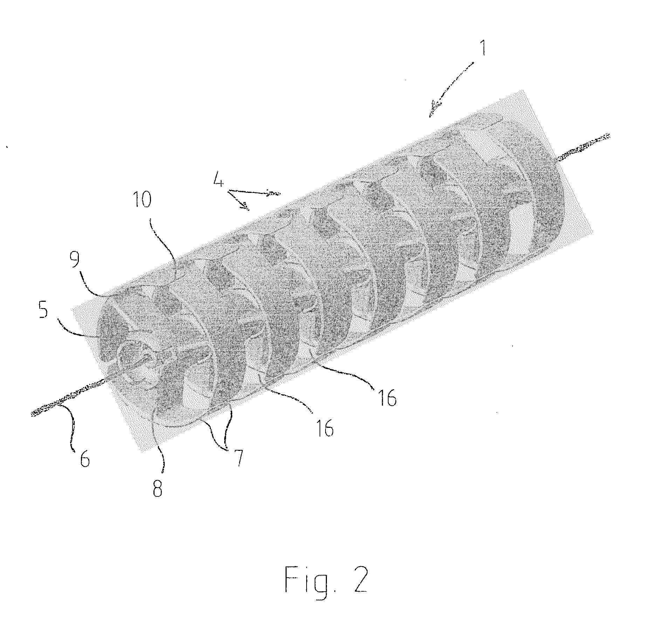

Figur 2 zeigt schematisch die Ausbildung einer Leitungsführungseinnchtung 1, in der Leitungen, Schläuche oder dergleichen geführt werden. Die Darstellung der Figur 2 enthält aus Übersichtlichkeitsgründen keine derartigen Leitungen, Schläuche oder dergleichen. Die Leitungseinrichtung 1 ist durch gelenkig miteinander verbundenen Glieder 4 gebildet. Die Glieder 4 weisen jeweils einen Zentralbereich 5 auf, durch die sich ein flexibles Verbindungselement 6 hindurch erstreckt.

Bei dem flexiblen Verbindungselement kann es sich beispielsweise um ein Seil aus Metall handeln, das aus einer Vielzahl von Filamenten gebildet ist.

Die Leitungen, Schläuche oder dergleichen werden in einem Kanal 9 geführt. In dem dargestellten Ausführungsbeispiel weist die Leitungsfüh-1 drei Kanäle 9 auf, die von außen her jeweils durch einen Spalt 10 mit einer Leitung bestückbar sind. Der Spalt 10 ist dabei so bemessen, dass während des Betriebes der Leitungsführungseinrichtung Leitungen nicht aus dem Kanal 9 entweichen können.

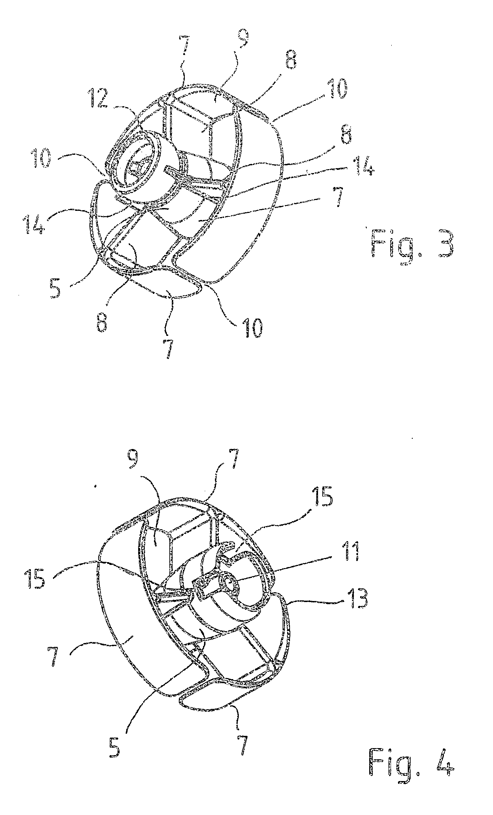

In den Figuren 3 und 4 ist ein Glied 4 der Leitungsführungsemrichtung 1, wie sie in der Figur 2 dargestellt ist, gezeigt. Das Glied 4 weist einen Zentralkörper 5 auf. Der Zentralkörper 5 enthält eine sich in Längsrichtung des Zentralkörpers erstreckende Durchführung 11, durch die das flexible Verbindungselement 6 hindurchgeführt wird.

Am Außenmantel des Zentralkörpers 5 sind in dem dargestellten Ausführungsbeispiel drei Stege 8 vorgesehen. Die Stege 8 sind in Umfangsrichtung des Zentralkörpers 5 betrachtet, äquidistant zueinander angeordnet.

Mit einem jeden Steg 8 ist eine Wand 7 verbunden, diese teilkreisförmig ausgebildet ist. Die Wände 7 liegen auf einem gedachten Umfangskreis. Zwischen zwei benachbarten Wänden 7 ist ein Spalt 10 ausgebildet. Durch den Spalt 10 kann eine Leitung in den Kanal 9 eingebracht oder aus diesem herausgenommen werden. Die Dicke der Wand 7 nimmt von dem Steg 8 in Richtung des Spalts 10 ab. Aufgrund der Krümmung der Wand und der Abnahme der Materialstärke ist ein Endbereich der Wand 7 flexibel, wobei die Biegekraft, die notwendig ist, um den Endbereich in Richtung des Zentralkörpers 5 zu biegen, geringer ist als die Kraft, die notwendig ist, um diesen Endbereich von dem Zentralkörper 5 wegzubiegen. Durch diese Maßnahme wird auch sichergestellt, dass während des Betriebes des Roboters Leitungen nicht unbeabsichtigt aus dem Kanal 9 herauskommen.

Die Leitungsführungseinrichtung ist räumlich auslenkbar. Hierzu weisen die Glieder entsprechend ausgebildete Gelenke aus. Wie aus den Darstellungen der Figuren 3 und 4 ersichtlich ist, können zwei benachbarte Glieder durch ein Kugelgelenk miteinander verbunden werden. Hierzu ist in dem einen Ende des Zentralkörper 5 ein kugelförmig ausgebildeter Gelenkkörper 12 ausgebildet. An dem gegenüberliegenden Ende zenitradkörpers 5 ist eine korrespondierend ausgebildete Gelenkschale 13 vorgesehen.

Zur Begrenzung der räumlichen Auslenkung weist das Glied 4 Mittel auf. Diese Mittel umfassen in dem dargestellten Ausführungsbeispiel drei Anschläge. Die Anschläge sind durch radial auswärts gerichtete Vorsprünge 14. gebildet. Die Vorsprünge 14 sind an dem Gelenkkörper 12 ausgebildet und sind äquidistant zueinander auf dem Gelenkkörper 12 in dem dargestellten Ausführungsbeispiel gehen die Vorsprünge 14 in die Stege 8 über.

Die Gelenkschale 13 weist drei Aussparungen 15 auf, in die die Vorsprünge 14 eingreifen, wenn zwei Glieder miteinander sind. Durch die Gestalt der Vorsprünge 14 sowie die Form der Aussparungen 15 kann der Verschwenkwinkel bestimmt werden, Es besteht die MöglichKeit, dass die Leitungsführungseinrichtung abschnittsweise unterschiedliche Auslenkwinkel aufweist, so dass diese der Bewegung des Roboters angepasst ist.

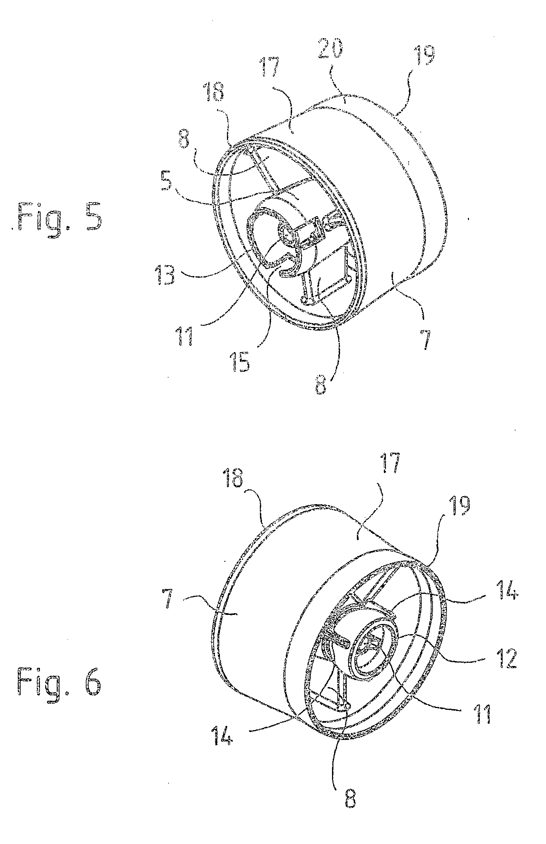

In der Figur 2 ist die Leitungsführungseinrichtung 1 durch Glieder 4 aufgebaut, die Wände 7 aufweisen, deren Breite geringer ist als die Breite der Zentralkörper 5, so dass Freiräume 16 zwischen den Wänden 7 benachbarter Kettenglieder vorliegen. Um eine im wesentlichen geschlossene Leitungsführungseinrichtung für einen Roboter bereitzustellen, kann die Leitungsführungseinrichtung aus einzelnen Gliedern aufgebaut werden, wie es in der Figur 5 beziehungsweise 6 dargestellt ist. Der grundsätzliche Aufbau des Gliedes 4, wie er in der Figur 5 beziehungsweise 6 dargestellt ist. Das Glied entspricht im wesentlichen dem Aufbau eines Gliedes 4, wie es in der Figur 3 beziehungsweise Figur 4 gezeigt ist.

Das in den Figuren 5 und 6 dargestellte Glied weist eine umlaufende Wand 7 auf. Die Wand 7 weist einen im wesentlichen kegelförmigeil Abschnitt 17 der sich von einer Stirnfläche 18 in Richtung der gegenüberliegenden Stirnfläche 19 hin verjüngt. Im Abstand zur Stirnfläche 19 ist ein Abschnitt 20 der Wand 7 ausgebildet. Der Abschnitt 20 ist gewölbt ausgebildet.

Die Stege 8, die die Wand 7 mit dem Zentralkörper 5 verbinden sind beabstandet zu der Stirnfläche 18 beziehungsweise zu der Stirnfläche 19.

Werden zwei Glieder, wie es in der Figur 5 beziehungsweise 6 dargestellt ist, miteinander verbunden, so greift der Abschnitt 20 in den durch den Abschnitt 19 begrenzten Raum hinein, so dass in gestreckter Lage der Glieder eine geschlossene Kanalführung entsteht. Der Abschnitt 20 ist derart ausgebildet, dass dieser eine räumliche Auslenkung zweier Glieder, die miteinander verbunden sind, zulässt. Der weitere Aufbau des Gliedes nach Figur 5 beziehungsweise 6 entspricht dem Aufbau des Gliedes nach. Figur 3 beziehungsweise 4.

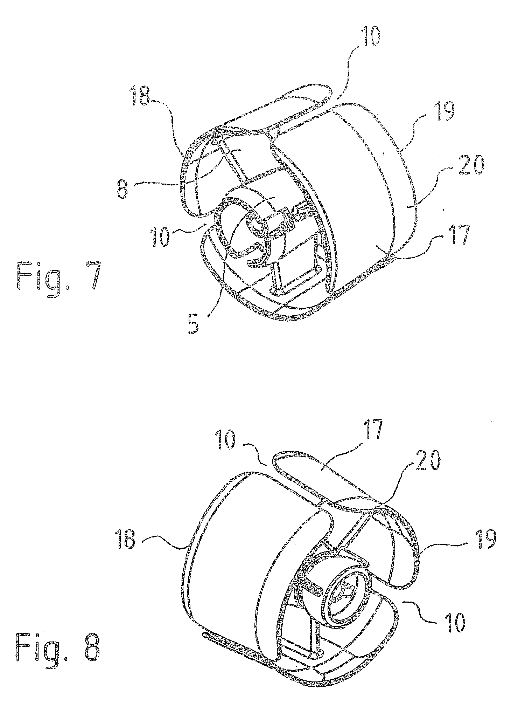

In den Figuren 7 und 8 ist eine Abwandlung des in den Figuren 5 rund 6 dargestellten Gliedes gezeigt. Der Unterschied zwischen dem Glied nach Figur 7 beziehungsweise 8 und dem Glied nach Figur 5 beziehungsweise 6 besteht darin, dass die Wand 7 durch Spalte 10 unterteilt ist. Hierdurch besteht die Möglichkeit die Leitungen durch die Spalte 10 in die Glieder einzuführen.

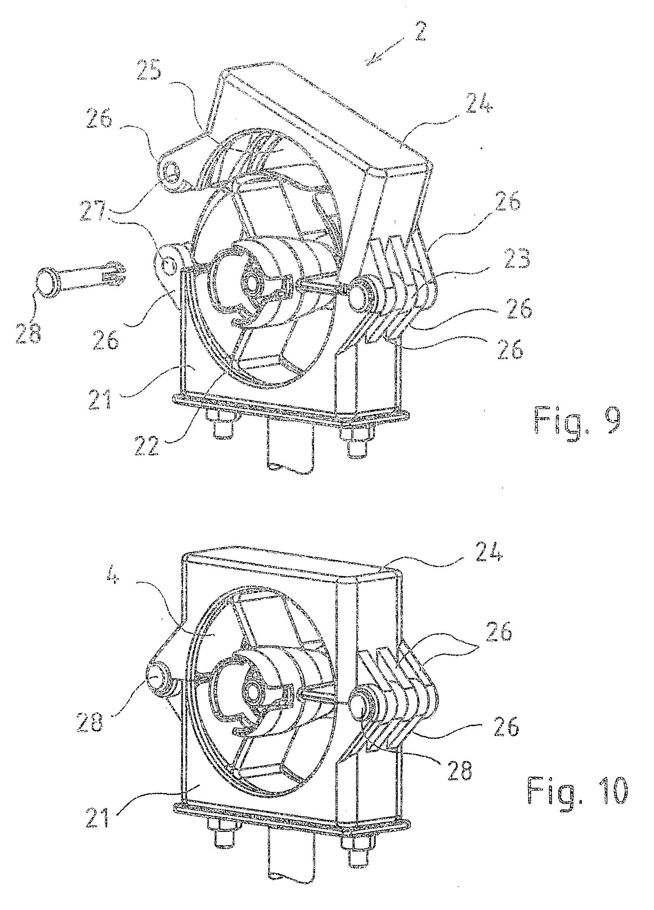

Zur Festlegung der Leitungsführungseinrichtung an dem Roboter sind Halterungen 2 vorgesehen. Ein bevorzugtes Ausführungsbeispiel der Ausbildung einer Halterung 2 ist in den Figuren 9 und 10 dargestellt. Die Halterung 2 ist im wesentlichen schellenförmig ausgebildet. Sie weist einen Grundkörper 21 auf, der eine Aufnahme 22 aufweist. Der Grundkörper 21 ist über Verbindungsmittel mit dem Roboter, welcher nicht dargeist, verbindbar. Über ein Gelenk 23 ist der Grundkörper 21 mit einem Schließkörper 24 verbunden. Der Schließkörper weist gleichfalls eine Aufnahme 25 auf. Im geschlossenen Zustand der Halterung 2 liegt ein Glied 4 innerhalb der Aufnahme 22, 25 wobei die Halterung 2 form- und/oder kraftschlüssig mit dem Glied 4 verbunden ist.

Der Grundkörper 21 sowie der Schließkörper 24 weisen Laschen 26 auf, die jeweils mit einer Bohrung 27 ausgebildet sind. Im geschlossenen Zustand der Halterung 2 liegen die Laschen 26 hintereinander, wobei die Bohrungen 27 koaxial zueinander sind. Mittels eines Bolzens 28 werden die Körper 21, 24 miteinander verbunden, wobei der Bolzen 28 in die Öffnungen 27 hineinragt. Das freie Ende des Bolzens 28 ist deram auscebildet, dass es eine Rastverbindung mit einer der Laschen eingeht. Auch das Gelenk 23 ist in entsprechenderweise ausgebildet, so dass die Halterung 2 wahlweise von der einen oder von der anderen Seite her geöffnet werden kann.

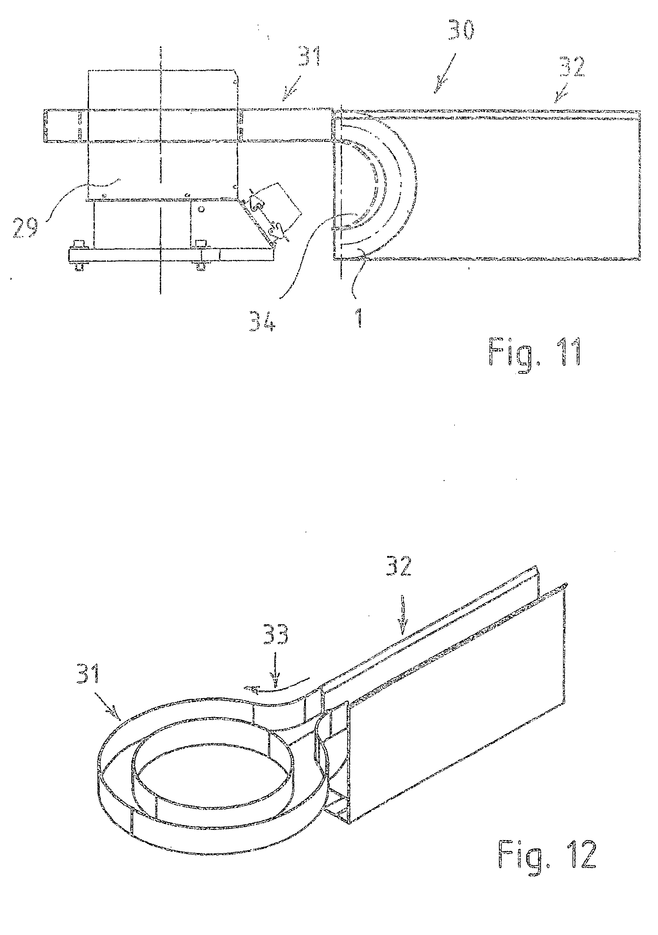

In der Figur 11 ist ein Sockel 29 eines Roboters dargestellt. Im Bereich des Sockels 29 ist eine Einrichtung 30 zum Führen und Speichern einer Leitungsführungseinrichtung 1 ausgebildet. Die Einrichtung weist einen in einer ersten Ebene ausgebildeten Führungsbereich 31 und einen in einer zweiten Ebene, die von der ersten Ebene verschieden ist, ausgebildeten Speicherbereich 32 auf.

In dem dargestellten Ausführungsbeispiel ist der Führungsbereich 31 im wesentlichen in einer horizontalen Ebene ausgebildet. Der Speicherbereich 3 ist in einer im wesentlichen vertikalen Ebene ausgebildet.

Figur 12 zeigt, dass der Führungsbereich in Form einer Rinne ausgebildet ist. In dem dargestellten Ausführungsbeispiel umgibt der Führungsbereich 31 den Sockel 29 über seinen gesamten Umfang. Dies ist nicht zwingend notwendig. Der Speicherbereich 32 ist im wesentlichen kastenförmig ausgebildet.

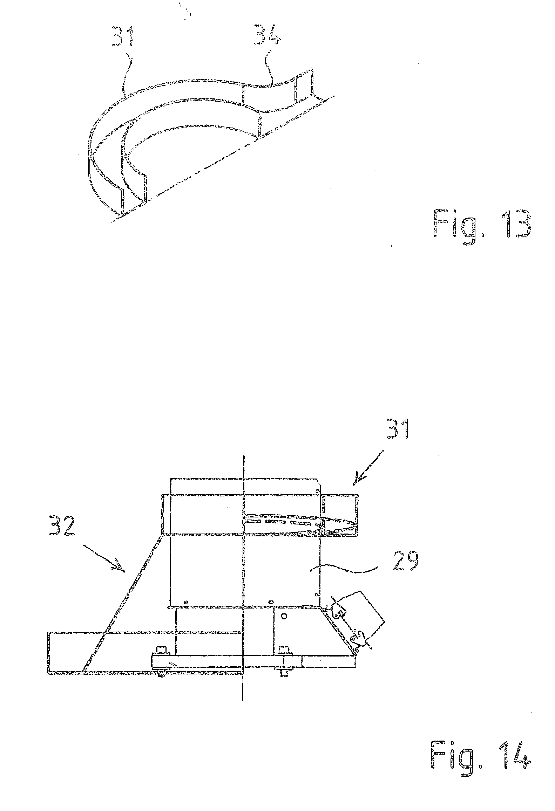

Zwischen dem Führungsbereich 31 und dem Speicherbereich 32 ist ein Übergangsbereich 33 ausgebildet. Innerhalb des Übergangsbereichs 33 besteht die Möglichkeit in Abhängigkeit von der Bewegungsrichtung des Roboters, dass die nicht dargestellte Leitungsführungseinrichtung entweder in den Führungsbereich im Uhrzeigersinn oder entgegengesetzt dem. Uhrzeigersinn eingeführt wird, wie dies durch die Pfeile in der Figur 12 angedeutet ist. Der Führungsbereich, der Speicherbereich und/oder Übergangsbereich sind wenigstens teilweise als Formteile, insbesondere Blechformteile ausgebildet, Figur 13 zeigt in einer perspektivischen Ansicht ein Teil des Führungsbereichs 31 und des Übergangsbereichs 33. Gestrichelt ist eine Spiegelachse eingezeichnet, so dass der Führungsbereich und der Speicherbereich spiegelbildlich ausbildbar sind.

Zur Ausbildung eines Krümmungsradiusses der Leitungsführungseinrichtung ist in dem Speicherbereich 32 eine kreisförmige Einlage 34 angeordnet, wie dies aus der Figur 11 ersichtlich ist.

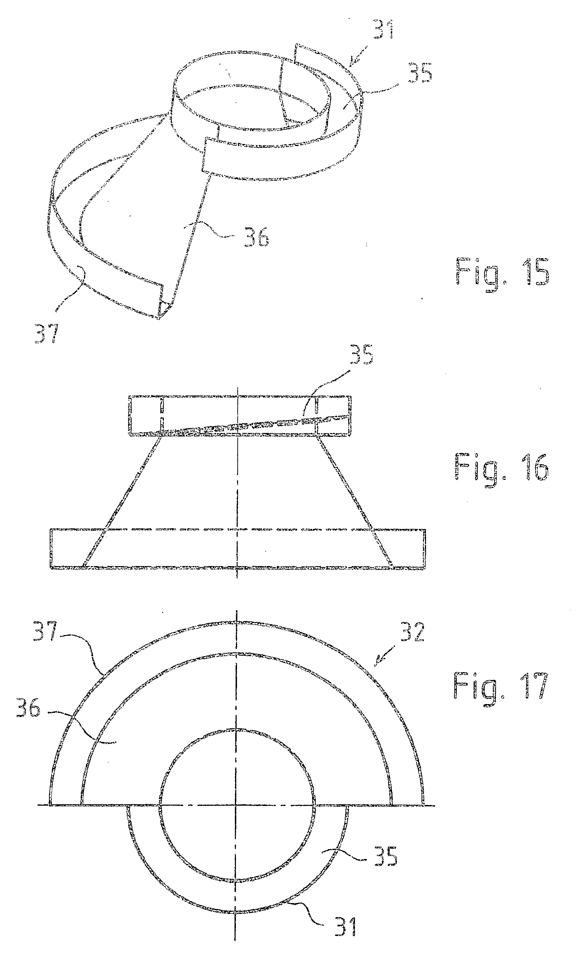

In den Figuren 14 bis 17 eine weitere Ausführungsform der Einrichtung zum Führen und Speichern einer Leitungsführungseinrichtung im Sockel eines Roboters dargestellt. Die Einrichtung weist einen Führungsbereich 31 auf, der in dem dargestellten Ausführungsbeispiel den Sockel 29 des Roboters teilweise umgibt. Der Führungsbereich 31 ist im Querschnitt U-fürmig ausgebildet. Der Bonden 35 des Führungsbereichs 31 steigt wendeiförmig an. Der Führungsbereich 31 ist mit einem Speicherbereich 32 verbunden. Der Speicherbereich 32 weist eine Wand 36 auf, die kegelstumpfförmig ausgebildet ist. Mit der Wand 36 ist eine L-förmige Begrenzung 37 verbunden. In dem dargestellten Ausführungsbeispiel umgibt der Führungsbereich 31 den Sockel über einen Winkel von ca. 180°. Der Speicherbereich 32 umgibt den Sockel gleichfalls über einen Winkel von ca. 180°.

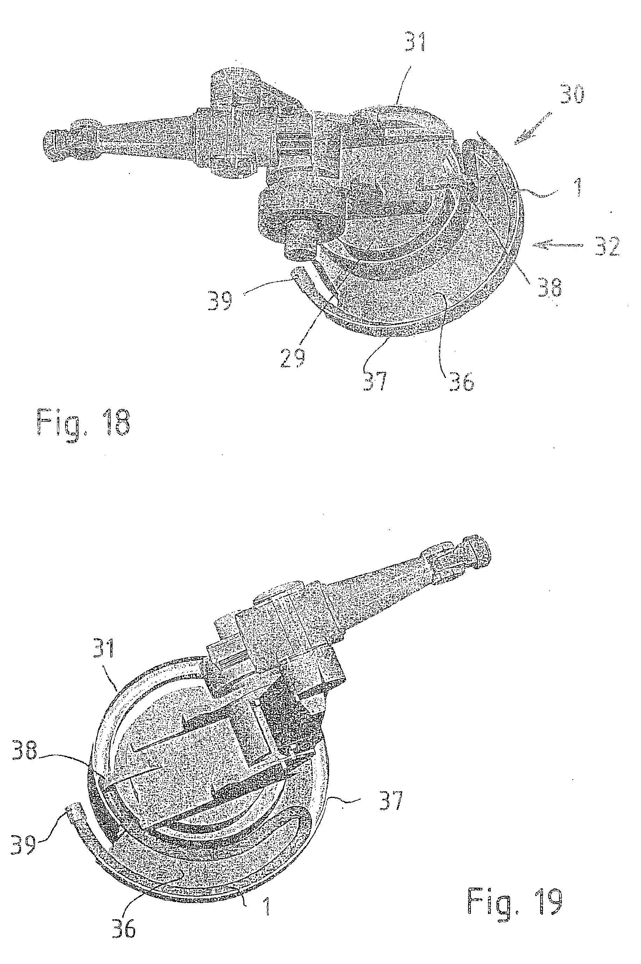

In den Figuren 18 und 19 sind Momentaufnahmen der Stellung eines Roboters dargestellt. Der Roboter weist einen Sockel 29 auf, der von einer Einrichtung 30 zum Führen und Speichern einer Leitungsführungseinrich" tung 1 umgeben ist. Der Roboter ist über einen Mitnehmer 38 mit einem Ende der Leitungsführungseinrichtung 1 verbunden. Das gegenüberliegende Ende 39 der Leitungsführungseinrichtung 1 ist ortsfest angeordnet.

In der Figur 18 ist dargestellt, dass sich die Leitungsführungseinrichtung 1 in dem Speicherbereich 32 befindet. Der Untertrum der Leitungsführungseinrichtung liegt in der Begrenzung 37 und an der Wand 3 6 an. Der gekrümmte Bereich der Leitungsführungseinrichtung, der zwischen dem Untertrum und dem Obertrum liegt, liegt an der Wand 36 an. Die Leitungsführungseinrichtung 1 ist vorzugsweise derart ausgebildet, dass durch eine entsprechende Ausgestaltung der gelenkigen Verbindungen zwischen den Gliedern der Leitungsführungseinrichtung der gekrümmte Bereich der Leitungsführungseinrichtung stets zur Anlage an die Wand 36 gelangt, so dass auf eine zusätzliche Abdeckung, die zugleich Rührung sein könnte, verzichtet werden kann. Dies ist jedoch nicht zwingend notwendig. Eine solche Abdeckung kann auch aus sicherheitstechnischen Gründen zweckmäßig sein.

Figur 19 zeigt eine Momentaufnahme, in der der Roboter mit dem Mitnehmer 38 derart verdreht wurde, dass der Mitnehmer 38 mit der Leitungsführungseinrichtung 1. in den Führungsbereich 3 gelangt. Die Leitungsführungseinrichtung wird in dem Fünrungsbereich 31 geführt. Durch die Ausgestaltung der Einrichtung zum Führen und Speichern der Leitungsführungseinrichtung wird die Möglichkeit geschaffen, dass der Roboter mit dem Mitnehmer 38 einen Umfangswinkei von bis zu 360° überfahren kann.

### Bezugszelchenliste

- 1: Leitungsführungseinrichtung
- 2: Halterung
- 3: Leitung
- 4: Glied
- 5: Zentralbereich
- 6: Verbindungselement
- 7: Wand
- 8: Steg
- 9: Kanal
- 10: Spalt
- 11: Durchführung
- 12: Gelenkkörper
- 13: Gelenkschale
- 14: Vorsprung
- 15: Aussparung
- 16: Freiraum
- 17: Abschnitt
- 18: Stirnfläche
- 19: Stirnfläche
- 20: Abschnitt
- 21: Grundkörper
- 22: Aufnahme
- 23: Gelenk
- 24: Schließkörper
- 25: Aufnahme
- 26: Lasche
- 27: Öffnung
- 28: Bolzen
- 29: Sockel
- 30: Einrichtung
- 31: Führungsbereich
- 32: Speicherbereich
- 33: Übergangsbereich
- 34: Einlage
- 35: Boden
- 36: Wand
- 37: Begrenzung
- 38: Mitnehmer
- 39: Ende der Leitungsführungseinrichtung

## Patentansprüche

1. Roboter mit wenigstens einer mindestens teilweise außenseitig verlaufenden Leitungsführungseinrichtung (1), in der Leitungen (3), Schläuche oder dergleichen geführt werden mit einer Einrichtung (30) zum Führen und Speichern der Leitungsführungseinrichtung im Bereich des Sockels (29) des Roboters **dadurch gekennzeichnet, dass** die Einrichtung (30) einen in einer ersten Ebene ausgebildeten Führungsbereich (31) und einen in einer zweiten, von der ersten Ebene verschiedenen Ebene ausgebildeten Speicherbereich (32) aufweist, wobei die Ebenen unter einem Winkel von bis zu 90° zu einander stehen.

2. Roboter nach Anspruch 1, **dadurch gekennzeichnet, dass** der Führungsbereich (31) in einer im wesentlichen horizontalen Ebene liegt

3. Roboter nach Anspruch 1 oder 2, **dadurch gekennzeichnet, dass** der Speicherbereich (32) in einer im wesentlichen vertikalen Ebene liegt.

4. Roboter nach einem der Ansprüche 1 bis 3, **dadurch gekennzeichnet, dass** der Führungsbereich (31) in Form einer Rinne ausgebildet ist.

5. Roboter nach einem der Ansprüche 1 bis 4, **dadurch gekennzeichnet, dass** der Führungsbereich (31) bogenförmig, insbesondere teilkreisförmig, vorzugsweise ringförmig ausgebildet ist.

6. Roboter nach einem der Ansprüche 1 bis 5, **dadurch gekennzeichnet, dass** der Speicherbereich (32) so ausgebildet ist, dass die Leitungsführungseinrichtung (1) im Speicherbereich (32) einen Obertrum und einen Untertrum bildet.

7. Roboter nach einem der Ansprüche 1 bis 6, **dadurch gekennzeichnet, dass** der Führungsbereich (31) und der Speicherbereich (32) lösbar miteinander verbunden sind.

8. Roboter nach einem der Ansprüche 1 bis 7, **dadurch gekennzeichnet, dass** zwischen dem Führungsbereich (31) und dem Speicherbereich (32) ein Übergangsbereich (33) vorgesehen ist.

9. Roboter nach einem der Ansprüche 1 bis 8, **dadurch gekennzeichnet, dass** der Führungsbereich (31), der Speicherbereich (32) und/oder der Übergangsbereich (33) wenigstens teilweise als Formteile, insbesondere Blechformteile, ausgebildet sind.

## Claims

1. Robot comprising at least one cable-guiding device (1), which runs at least partially on the outer side and in which cables (3), hoses or the like can be guided, comprising a device (30) for the guidance and storage of the cable-guiding device in the region of the base (29) of the robot, **characterized in that** the device (30) has a guide region (31) configured in a first plane and a storage region (32) configured in a second plane different from the first plane, wherein the planes stand at an angle of up to 90° to each other.

2. Robot according to Claim 1, **characterized in that** the guide region (31) lies in a substantially horizontal plane.

3. Robot according to Claim 1 or 2, **characterized in that** the storage region (32) lies in a substantially vertical plane.

4. Robot according to one of Claims 1 to 3, **characterized in that** the guide region (31) is configured in the form of a channel.

5. Robot according to one of Claims 1 to 4, **characterized in that** the guide region (31) is of arc-shaped, in particular part-circular, preferably annular configuration.

6. Robot according to one of Claims 1 to 5, **characterized in that** the storage region (32) is configured such that the cable-guiding device (1) forms in the storage region (32) a top strand and a bottom strand.

7. Robot according to one of Claims 1 to 6, **characterized in that** the guide region (31) and the storage region (32) are detachably connected to each other.

8. Robot according to one of Claims 1 to 7, **characterized in that** between the guide region (31) and the storage region (32) there is provided a transition region (33).

9. Robot according to one of Claims 1 to 8, **characterized in that** the guide region (31), the storage region (32) and/or the transition region (33) are configured at least partially as shaped parts, in particular sheet-metal shaped parts.

## Revendications

1. Robot, comprenant au moins un dispositif de guidage de lignes (1) s'étendant au moins en partie du côté extérieur, dans lequel sont guidés des lignes (3), des tuyaux ou similaires, comprenant un dispositif (30) pour guider et retenir le dispositif de guidage de lignes dans la région du socle (29) du robot, **caractérisé en ce que** le dispositif (30) présente une région de guidage (31) réalisée dans un premier plan et une région de retenue (32) réalisée dans un deuxième plan différent du premier plan, les plans étant orientés suivant un angle pouvant aller jusqu'à 90°.

2. Robot selon la revendication 1, **caractérisé en ce que** la région de guidage (31) se situe dans un plan essentiellement horizontal.

3. Robot selon la revendication 1 ou 2, **caractérisé en ce que** la région de retenue (32) se situe dans un plan essentiellement vertical.

4. Robot selon l'une quelconque des revendications 1 à 3, **caractérisé en ce que** la région de guidage (31) est réalisée sous forme de rigole.

5. Robot selon l'une quelconque des revendications 1 à 4, **caractérisé en ce que** la région de guidage (31) est réalisée sous forme courbe, notamment sous forme de cercle partiel, de préférence sous forme annulaire.

6. Robot selon l'une quelconque des revendications 1 à 5, **caractérisé en ce que** la région de retenue (32) est réalisée de telle sorte que le dispositif de guidage de lignes (1) forme, dans la région de retenue (32), un tronçon supérieur et un tronçon inférieur.

7. Robot selon l'une quelconque des revendications 1 à 6, **caractérisé en ce que** la région de guidage (31) et la région de retenue (32) sont connectées l'une à l'autre de manière détachable.

8. Robot selon l'une quelconque des revendications 1 à 7, **caractérisé en ce que** l'on prévoit une région de transition (33) entre la région de guidage (31) et la région de retenue (32).

9. Robot selon l'une quelconque des revendications 1 à 8, **caractérisé en ce que** la région de guidage (31), la région de retenue (32) et/ou la région de transition (33) sont réalisées au moins en partie sous forme de pièces moulées, notamment sous forme de pièces moulées en tôle.
